# EUROPÄISCHE PATENTSCHRIFT

(11) **EP 0 544 676 B1**
(45) Veröffentlichungstag und Bekanntmachung des Hinweises auf die Patenterteilung: **04.10.1995**
(21) Anmeldenummer: 91909302.1
(22) Anmeldetag: 08.05.1991
(51) Int. Cl.: C09B 67/42

(54) **STAUBARME ODER STAUBFREIE FARBSTOFFPRÄPARATIONEN**
LOW-DUST OR DUST-FREE DYE PREPARATIONS
PREPARATIONS DE COLORANTS AVEC PEU OU PAS DE POUSSIERE

(30) Priorität: 11.05.1990 DE 4015183; 03.11.1990 DE 4035029
(43) Veröffentlichungstag der Anmeldung: 09.06.1993
(73) Patentinhaber: HOECHST AKTIENGESELLSCHAFT, 65926 Frankfurt am Main (DE)
(72) Erfinder: MISCHKE, Peter, D-6232 Bad Soden am Taunus (DE); OPITZ, Konrad, D-6232 Liederbach (DE); REBSAMEN, Karl, D-6238 Hofheim am Taunus (DE)
(86) Internationale Anmeldenummer: EP9100868
(87) Internationale Veröffentlichungsnummer: WO9118059

(56) Entgegenhaltungen:
- BE-A- 661 016
- DD-A- 258 022
- DE-A- 2 507 188
- FR-A- 2 373 592
- FR-A- 2 373 593

## Beschreibung

Die Erfindung liegt auf dem technischen Gebiet der Farbstoffpräparationen.

Pulverförmige Farbstoffpräparationen werden industriell im großen Umfang produziert und verwendet, z.B. zur Herstellung von Klotz- und Färbeflotten für das Färben textiler Materialien und zur Herstellung von Druckpasten, mit denen Papier und Textilien bedruckt werden. Pulverförmige Farbstoffpräparationen neigen sowohl bei der Herstellung als auch bei der Anwendung zum Stauben. Diese Staubentwicklung kann zu Farbstoffverlusten, zur Verschmutzung von Arbeitsplätzen und Ware sowie zu gesundheitlichen Gefährdungen der mit der Handhabung solcher staubenden Präparationen befaßten Personen führen.

Zur Lösung dieses Problems hat es mannigfache Anstrengungen in unterschiedliche Richtungen gegeben.

So wurden bspw. flüssige Präparationen und Granulate entwickelt. Flüssige Präparationen besitzen naturgemäß das Staubproblem nicht, haben aber andere Nachteile, wie begrenzte Lagerbeständigkeiten und niedrige Farbstoffgehalte, was erhöhte Verpackungs-, Lager- und Transportkosten bedingt. Zudem lassen sich flüssige Präparationen nur von ausreichend gut löslichen Farbstoffen herstellen. Granulate erfordern spezielle Herstellungstechnologien und können nur mit zusätzlichen und teuren Apparaturen produziert werden. Darüber hinaus sind die meisten Granulate ebenfalls nicht staubfrei oder bilden spätestens beim Ab- oder Umfüllen oder während des Transports Staub. Sie müssen deshalb wie Pulver mit Entstaubungsmitteln, wenn auch mit geringeren Mengen, behandelt werden.

Andererseits wurden vielfältige Anstrengungen unternommen, pulverförmige Farbstoffe durch Zusatz von Entstaubungsmitteln in eine staubarme oder staubfreie Form zu bringen. Zu diesem Zweck wurden bspw. Phthalsäureester, Silikone, Dodecylbenzol, Tenside sowie Mineralöl allein oder in Kombination mit nichtionogenen, anionischen oder kationischen Tensiden eingesetzt (s. bspw. US-Patentschriften 2 604 469 und 3 560 134, Deutsche Patentschrift 834 237, Deutsche Offenlegungsschrift 2 523 096, Deutsche Auslegungsschrift 1 117 582 und Europäische Patentanmeldungs-Veröffentlichung 0 023 638A), desweiteren gemäß der französischen Patentanmeldungs-Veröffentlichung Nr. 2 373 592 Gemische aus festen Polyhydroxyalkanen als Haftmittel und Tensiden als Staubbindemittel. Weiterhin werden gemäß der DDR-Patentschrift Nr. 258 022 Vierkomponenten-Gemische aus hochsiedenden Kohlenwasserstoffen, deren Sulfonamid- und Bisoxethylcarbonsäureamid-Derivaten und 1,3-Butylenglykol als staubvermindernde Hilfsmittel empfohlen.

Die Anwendung all dieser Entstaubungsmittel bzw. -methoden ist aber mit beträchtlichen Risiken und Nachteilen verbunden. Mineralöle und andere nicht wasserlösliche Entstaubungsmittel verschlechtern in der Regel die für energiesparende Kaltfärbeverfahren wichtige Kaltwasserlöslichkeit. Hinzu kommt die Bildung öliger Abscheidungen in den Färbeflotten, wodurch fleckige, unegale Färbungen verursacht werden können. Dem sollen die Tensidzusätze entgegenwirken, die außerdem die gleichmäßige Verteilung der wasserunlöslichen Entstaubungsmittel ermöglichen sollen, wenn diese den Farbstofflösungen, -dispersionen oder -suspensionen schon vor der Trocknung, z.B. Sprühtrocknung, zugesetzt werden. Abgesehen von der unerwünschten, weil beim technischen Ablauf des Färbens störenden Schaumentwicklung der Tenside, können bei Verwendung nichtionogener Tenside allein oder in Kombination mit Mineralöl insbesondere unter den beim Färben mit Reaktivfarbstoffen üblichen Bedingungen, nämlich Zusatz von Elektrolyten (wie Natriumchlorid oder Natriumsulfat) und Alkali (wie Natriumcarbonat oder Natronlauge), ebenfalls ölige Abscheidungen in den Färbeflotten auftreten, entweder weil unter den Färbebedingungen die Mineralöl-Tensid-Emulsionen brechen oder der Trübungspunkt der nichtionogenen Tenside bis auf Färbetemperatur oder darunter herabgesetzt wird.

Seit man erkannte, daß staubende Farbstoffe auch eine gesundheitliche Gefährdung der damit umgehenden Personen zur Folge haben können, werden wesentlich höhere Anforderungen an die Entstaubung der Farbstoffe gestellt. So genügen Staubwerte, mit denen in der oben erwähnten deutschen Auslegeschrift und europäischen Patentanmeldungs-Veröffentlichung "staubfreie" und "staubarme" von staubenden Farbstoffpräparationen abgegrenzt werden, den heutigen Anforderungen in keiner Weise. Auch kann man Farbstoffpulver mit einem Staubwert von unterhalb 10 nicht generell als staubfrei bezeichnen. So kann ein Farbstoffpulver mit einer Staubzahl von kleiner als 5 durchaus noch soviel Feinstaub entwickeln, daß eine gesundheitliche Schädigung der damit in Kontakt kommenden Perslnen nicht auszuschließen ist. Es wurde deshalb eine Methode entwickelt (s. Melliand Textilberichte 1989, Seiten 690-692), mit der der auftretende Staub abfiltriert und die Menge des Filterbelages (im nachfolgenden als "Filterwert" bezeichnet) bestimmt wird. Hierbei bedeutet ein Filterwert von 1 eine hohe Staubentwicklung, während ein Filterwert von 5 anzeigt, daß ein Staubbelag auf dem Filter nicht erkennbar war. Sehr gut entstaubte Farbstoffpräparationen, die die heutigen Anforderungen in der Praxis erfüllen, müssen Filterwerte von über 3 aufweisen.

Mit den Entstaubungsmitteln, die in bekannten mehr oder weniger staubarmen Farbstoffpräparationen enthalten sind, lassen sich in vielen Fällen durch erhöhten Zusatz zwar Filterwerte von größer als 3 erreichen, die Nachteile solcher Farbstoffpräparationen, wie Schaumbildung, ölige Abscheidungen oder verschlechterte Löslichkeit, werden dabei aber noch verstärkt.

Es wurde nun gefunden, daß durch Verwendung bei Raumtemperatur von flüssigen Alkandiolen mit 5 bis 8 C-Atomen als Entstaubungsmittel hervorragende pulverförmige, im wesentlichen wasserfreie Farbstoffpräparationen mit guter Kaltwasserlöslichkeit erhalten werden, die die Nachteile der bekannten, mehr oder weniger gut entstaubten Farbstoffpräparationen nicht aufweisen und keine oder nur äußerst geringe Neigung zum Stauben zeigen.

Die Erfindung betrifft deshalb die Verwendung eines bei Raumtemperatur flüssigen Alkandiols mit 5 bis 8 C-Atomen oder einer Mischung solcher Alkandiole als Entstaubungsmittel in pulverförmigen, im wesentlichen wasserfreien Farbstoffpräparationen und des weiteren pulverförmige, im wesentlichen wasserfreie Farbstoffpräparationen, die durch den Gehalt eines bei Raumtemperatur flüssigen Alkandiols mit 5 bis 8 C-Atomen gekennzeichnet sind.

Die erfindungsgemäßen Farbstoffpräparationen können Feststoffpräparationen von gut wasserlöslichen, schwer wasserlöslichen oder wasserunlöslichen Farbstoffen sein, wie von anionischen, kationischen oder nichtionischen Farbstoffen, beispielsweise von Direktfarbstoffen, Säurefarbstoffen, Küpenfarbstoffen, Dispersionsfarbstoffen oder Reaktivfarbstoffen, die den unterschiedlichsten chemischen Klassen, wie den Monoazo-, Disazo-, Polyazo-, Stilben-, Coumarin-, Triphenylmethan-, Oxazin-, Triphendioxazin-, Formazan-oder Phthalocyanin-Farbstoffen und deren Metallkomplex-Farbstoffen, wie Kupfer-, Nickel-, Chrom- oder Kobaltkomplex-Azofarbstoffen, Kupfer- und Nickelphthalocyaninfarbstoffen und Kupferformazanfarbstoffen, angehören. Da die oben genannten Nachteile der bekannten Farbstoffpräparationen besonders bei Reaktivfarbstoffen zum Tragen kommen, besitzt die vorliegende Erfindung für diese Farbstoffklasse, insbesondere für diejenige mit einer faserreaktiven Gruppierung aus der Vinylsulfonreihe, die größte Bedeutung.

Erfindungsgemäß verwendbare, bei Raumtemperatur flüssige Alkandiole sind beispielsweise n-Pentan-1,5-diol, n-Pentan-2,5-diol, n-Pentan-2,3-diol, n-Hexan-2,5-diol und 2-Methyl-pentan-2,4-diol. Bevorzugt ist hiervon insbesondere 2-Methyl-pentan-2,4-diol.

Die erfindungsgemäßen staubarmen Farbstoffpräparationen können erfindungsgemäß in der Weise hergestellt werden, daß man die Alkandiole der Farbstofflösung, -dispersionen oder -Suspensionen vor der Trocknung, z.B. Sprühtrocknung, ganz oder vorzugsweise nur teilweise zusetzt; mit dieser Maßnahme erreicht man nicht nur die gewünschte bessere Handhabung des Trockenguts, sondern auch eine längere Standzeit und leichtere Reinigung der Abluftfilter der Trocknungsapparatur. Weiterhin können die erfindungsgemäßen staubarmen Farbstoffpräparationen durch Vermischen der Alkandiole mit dem alkandiolfreien oder bereits alkandiolhaltigen trockenen Farbstoffpulver hergestellt werden. Stellmittel und/oder andere Hilfsmittel können ebenso vor oder nach der Trocknung zugesetzt werden. Die Alkandiole können allein oder in Mischung miteinander verwendet werden.

Die erfindungsgemäßen Farbstoffpräparationen können noch die je nach Farbstoffklasse erforderlichen und üblichen Stell- und Hilfsmittel, wie anorganische Salze (bspw. Natriumchlorid oder -sulfat), anionische, kationische oder nichtionogene Tenside, bspw. die als Dispergiermittel verwendbaren, aus der Literatur bekannten Ligninsulfonate, Naphthalinsulfonsäure-Formaldehyd-Kondensationsprodukte (wobei die Naphthalinsulfonsäure-Komponente gegebenenfalls alkylsubstituiert sein kann), oxalkylierten aliphatischen oder aromatischen Hydroxyverbindungen und quaternierten Stickstoffverbindungen, Puffersubstanzen, wie bspw. die Alkalisalze der Phosphorsäure, der Essigsäure, der Borsäure und der Zitronensäure, Sequistriermittel, wie Polyphosphate und polymere aliphatische Carbonsäuren, bspw. Polyacrylsäuren und Copolymerisate der Acrylsäure mit Maleinsäure, Netzmittel, Stäbilisatoren, wie Reduktionsmittel und -inhibitoren, sowie hydrotrope Substanzen, in üblichen Mengen enthalten.

Die erfindungsgemäßen Farbstoffpräparationen können die Farbstoffe in weiten Grenzen enthalten, bspw. in Mengen von 20 bis 80 Gew.-%, bezogen auf die Gesamtmenge der Präparation. Bevorzugt sind Farbstoffpräparationen mit einem Farbstoffgehalt von 30 bis 70 Gew.-%. In der Regel enthalten die Präparationen, insbesondere, wenn es sich um wasserlösliche Farbstoffe handelt, übliche Stellmittel (bspw. Elektrolyte, wie Natriumsulfat, Natriumchlorid oder Kaliumchlorid) mit einem Gehalt von 10 bis 60 Gew.-%. Die erfindungsgemäß verwendbaren Alkandiole sind in den Präparationen zu 0,5 bis 20 Gew.-%, bevorzugt zwischen 1 bis 10 Gew.-%, enthalten. Andere der oben genannten Hilfsmittel, wie Puffersubstanzen, Dispergiermittel etc., können in summa in den Präparationen bis zu 40 Gew.-% enthalten sein. Die Gesamtmenge der Komponenten in den Präparationen addiert sich naturgemäß auf 100 Gew.-%.

Die Erfindung betrifft weiterhin die Verwendung der erfindungsgemäßen Farbstoffpräparationen zum Färben von für den jeweiligen Farbstofftyp üblichen Materialien nach für den Farbstofftyp und den Materialtyp gängigen Färbeverfahren. Die Materialien, die mittels der erfindungsgemäßen Präparationen gefärbt werden können, können beispielsweise in Form von Massen, Folien und als Fasermaterialien vorliegen. Solche Materialien sind beispielsweise carbonamid- und/oder hydroxygruppenhaltige Materialien synthetischen oder natürlichen Ursprungs, wie synthetische Polyamide, Wolle und Haare, Polyvinylalkohole und regenerierte und natürliche Cellulosefasermaterialien, wie Viskoseseide und Baumwolle. Erfindungsgemäße Farbstoffpräparationen mit faserreaktiven Farbstoffen oder Säurefarbstoffen eignen sich, wie für diese Farbstofftypen bekannt, vorzugsweise zum Färben von synthetischen und natürlichen Polyamiden und von natürlichen Cellulosefasermaterialien. Weitere Materialien, die mit erfindungsgemäßen Präparationen, die beispielsweise Dispersionsfarbstoffe enthalten, mit Vorteil gefärbt werden können, sind beispielsweise Polyurethan-, Polyacrylnitril- und Polyestermaterialien oder Celluloseacetate in Form von Massen oder Fasermaterialien. Erfindungsgemäße Farbstoffpräparationen mit kationischen (basischen) Farbstoffen sind beispielsweise zum Färben von sauer modifizierten Polyacrylnitrilmaterialien, insbesondere in Form von Fasern, geeignet. Weiterhin lassen sich mit den erfindungsgemäßen Farbstoffpräparationen, die sowohl anionische oder kationische als auch wasserunlösliche oder wasserschwerlösliche Farbstoffe enthalten, Materialien aus Cellulosefaserabkömmlingen, wie Papier, bspw. durch Bedrucken, färben.

Die nachstehenden Beispiele dienen zur Erläuterung der Erfindung. Teile sind Gewichtsteile, sofern nicht anders vermerkt. Gewichtsteile stehen im Verhältnis zu Volumenteilen wie Kilogramm zu Liter.

### Beispiel 1

308 Teile eines elektrolythaltigen (vorwiegend natriumchloridhaltigen) Pulvers des bekannten Farbstoffes der Formel 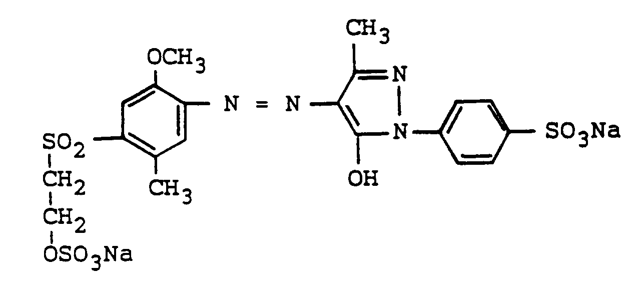
mit einem Farbstoffgehalt von 81 Gew.-% wurden mit 167 Teilen des Natriumsalzes eines Naphthalinsulfonsäure-Formaldehyd-Kondensationsproduktes mit einem Sulfonierungsgrad von 80 bis 120 % und einem durchschnittlichen Molgewicht von etwa 6500 sowie mit 25 Teilen 2-Methyl-pentan-2,4-diol in einem Mischer homogenisiert. Die erhaltene Farbstoffpräparation ist gut wasserlöslich und hat einen Filterwert von 4. Auch nach viermonatiger Lagerung bei Raumtemperatur oder nach vierwöchiger Lagerung bei 40°C blieb dieser Entstaubungswert unverändert.
Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 2

Die Herstellung einer erfindungsgemäßen Farbstoffpräparation erfolgte gemäß den Angaben des Beispieles 1, jedoch wurden anstelle des Naphthalinsulfonsäure-Formaldehyd-Kondensationsproduktes 83,5 Teile Natriumsulfat und 83,5 Teile eines handelsüblichen Natrium-Ligninsulfonats verwendet. Die Farbstoffpräparation besitzt die gleichen guten Eigenschaften wie die des Beispieles 1.

### Beispiel 3

In einer Mischapparatur wurden 254 Teile eines elektrolythaltigen (vorwiegend natriumsulfathaltigen) Pulvers des Farbstoffes der Formel 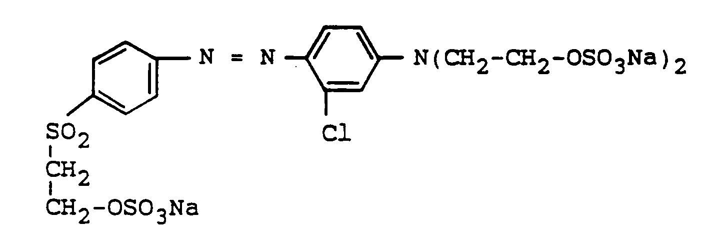
(bekannt aus Beispiel 3 der US-PS 4 271 072) mit einem Farbstoffgehalt von 81 Gew.-% zunächst mit 15,5 Teilen Natriumsulfat und 15,5 Teilen des Natriumsalzes eines handelsüblichen Naphthalinsulfonsäure-Formaldehyd-Kondensationsproduktes mit einem Sulfonierungsgrad von 80 bis 120 % und einem Molgewicht von etwa 6500 und anschließend mit 15 Teilen 2-Methyl-pentan-2,4-diol zu einer homogenen Mischung vermischt. Die erhaltene erfindungsgemäße Farbstoffpräparation ist gut wasserlöslich. Ihr Filterwert wurde mit 5 bestimmt. Dieser exzellente Entstaubungsgrad zeigt sich selbst nach einer Lagerung bei 40°C während 6 Wochen unverändert.
Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 4

In einer Mischapparatur wurden 78 Teile eines elektrolythaltigen (vorwiegend natriumchloridhaltigen) Pulvers des Farbstoffes der Formel 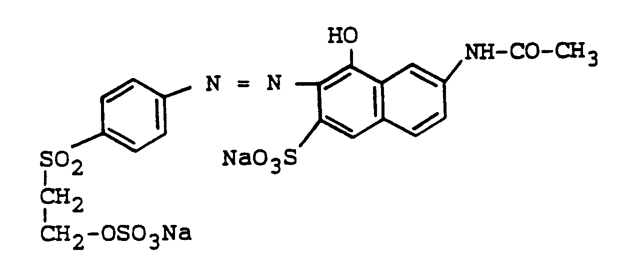
(bekannt aus Spalte 8, Zeilen 24 bis 26, bzw. Beispiel 2 der US-PS 4 707 545) mit einem Farbstoffgehalt von 75,5 Gew.-% mit 16 Teilen Natriumsulfat und 6 Teilen 2-Methyl-pentan-2,4-diol zu einer homogenen Mischung vermischt. Die erhaltene Farbstoffpräparation ist nicht nur in warmem Wasser gut löslich, sondern auch in kaltem Wasser, und zeigt einen Filterwert von 3-4. Diese vorteilhafte Eigenschaft des nur sehr geringen Staubens der erfindungsgemäßen Farbstoffpräparation bleibt auch bei einer Lagerung von über 6 Monaten bei Raumtemperatur und bei Lagerung bei 40°C während 4 Wochen unverändert. Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 5

388 Teile eines elektrolythaltigen Pulvers des aus der Deutschen Offenlegungsschrift 1 179 317 bekannten Farbstoffes der Formel 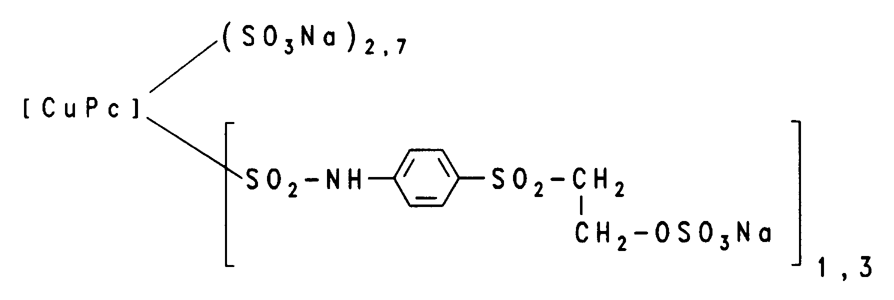
mit einem Farbstoffgehalt von 79,3 Gew.-% wurden mit 182 Teilen eines handelsüblichen Naphthalinsulfonsäure-Formaldehyd-Kondensationsproduktes (als Natriumsalz) mit einem Sulfierungsgrad von 80 bis 120 % und einem Molgewicht von etwa 6500 und 30 Teilen 2-Methyl-pentan-2,4-diol homogen vermischt. Die erhaltene erfindungsgemäße Farbstoffpräparation ist nicht nur gut in warmen, sondern auch gut in kaltem Wasser löslich. Sie ist nicht staubend und zeigt einen Filterwert von 5, der auch nach einer Lagerung von über 6 Monaten bei Raumtemperatur oder bei einer Lagerung von 6 Wochen bei 40°C unverändert ermittelt wurde.

### Beispiel 6

Die Herstellung einer erfindungsgemäßen Farbstoffpräparation erfolgte gemäß den Angaben des Beispieles 5, jedoch wurde anstelle des 2-Methyl-pentan-2,4-diols die gleiche Menge an n-Pentan-1,5-diol verwendet. Die erhaltene erfindungsgemäße Farbstoffpräparation ist auch in kaltem Wasser sehr gut löslich, zeigt einen Filterwert von 4, der auch nach langen Lagerzeiten unverändert bleibt, und liefert Färbungen in gleich hoher Qualität wie die Farbstoffpräparationen des Beispieles 5.

### Beispiel 7

62 Teile eines elektrolythaltigen (vorwiegend natriumchloridhaltigen) Pulvers des bekannten Farbstoffes der Formel 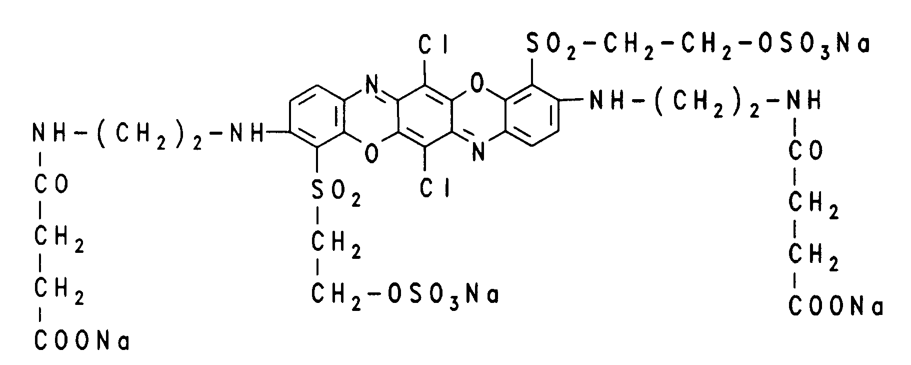
(bekannt aus Beispiel 3 der europäischen Patentanmeldungs-Veröffentlichung Nr. 0 258 493 A1) mit einem Farbstoffgehalt von 56,5 Gew.-% wurden mit 33 Teilen des Natriumsalzes eines Naphthalinsulfonsäure-Formaldehyd-Kondensationsproduktes mit einem Sulfierungsgrad von 80 bis 120 % und einem Molgewicht von etwa 6500 und 5 Teilen 2-Methyl-pentan-2,4-diol homogen vermischt. Die erhaltene erfindungsgemäße Farbstoffpräparation besitzt eine sehr gute Löslichkeit in kaltem Wasser und eine hervorragende Entstaubung mit einem Filterwert von 5, die auch nach einer Lagerung von über 6 Monaten bei Raumtemperatur und bei einer Lagerung von 6 Wochen bei 40°C unverändert beibehalten bleibt. Mit dieser Präparation lassen sich nach üblichen Färbeverfahren farbstarke, reine Färbungen ausgezeichneter Qualität erhalten.

### Beispiel 8

68 Teile eines elektrolythaltigen Farbstoffpulvers des Farbstoffes der Formel 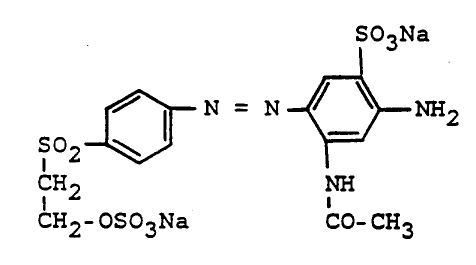
(bekannt aus Beispiel 1 der US-PS 4 703 112) mit einem Farbstoffgehalt von 60,3 Gew.-% wurden mit 27 Teilen Natriumsulfat und 5 Teilen 2-Methyl-pentan-2,4-diol homogen zu einem feinen Farbstoffpulver vermischt. Die erfindungsgemäße Farbstoffpräparation besitzt eine sehr gute Kaltwasserlöslichkeit; der Filterwert wurde mit 4-5 ermittelt. Diese hochwertigen Eigenschaften der Präparation werden auch nach langen Lagerzeiten praktisch unverändert beibehalten. Die mit ihr erhältlichen Färbungen sind von hoher Qualität; das enthaltene Entstaubungsmittel beeinflußt das Färbevermögen und die Qualität der Färbungen in keiner Weise.

### Beispiel 9

Eine erfindungsgemäße Farbstoffpräparation wurde durch homogenes Vermischen von 770 Teilen eines elektrolythaltigen (vorwiegend natriumchloridhaltigen) Pulvers des Farbstoffes der Formel 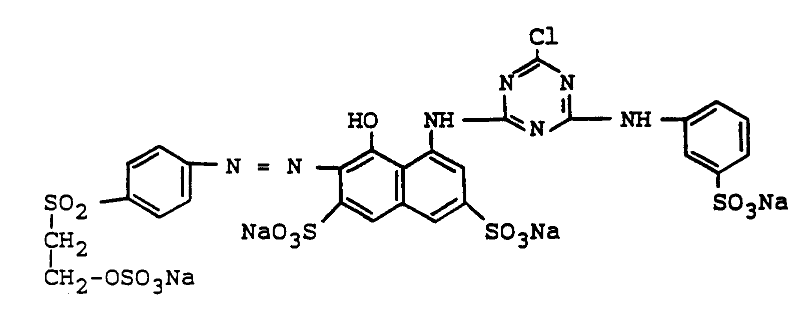
(bekannt aus Beispiel 1 der US-PS 4 725 675) mit einem Farbstoffgehalt von 53,3 Gew.-%, 180 Teilen Natriumsulfat und 50 Teilen 2-Methyl-pentan-2,4-diol hergestellt. Auch diese Präparation zeigt eine sehr gute Löslichkeit in kaltem Wasser und besitzt einen Filterwert von 4-5. Diese vorteilhaften Eigenschaften bleiben auch nach langer Lagerzeit unverändert erhalten, und die erhältlichen Färbungen zeigen gleich gute Qualitäten wie unter Anwendung des Farbstoffes ohne Zusatz des erfindungsgemäß verwendeten Entstaubungsmittels.

### Beispiel 10

181 Teile des elektrolythaltigen Pulvers des im vorhergehenden Beispiel 1 verwendeten Azofarbstoffes mit einem Farbstoffgehalt von 82,9 Gew.-% wurden mit 52 Teilen Natriumsulfat, 52 Teilen des Natriumsalzes eines Naphthalinsulfonsäure-Formaldehyd-Kondensationsproduktes mit einem Sulfierungsgrad von 80 bis 120 % und einem mittleren Molgewicht von etwa 6500 und 15 Teilen n-Hexan-2,5-diol zu einem homogenen Farbstoffpulver vermischt. Die erfindungsgemäße Farbstoffpräparation besitzt einen ausgezeichneten Entstaubungsgrad mit einem Filterwert von 5. Sie ist auch in kaltem Wasser sehr gut löslich und liefert reine, qualitativ hochwertige Färbungen und Drucke, beispielsweise auf Baumwolle nach den für faserreaktiven Farbstoffe üblichen Applikations- und Fixierverfahren. Die qualitativ hochwertigen Eigenschaften der erfindungsgemäßen Farbstoffpräparation werden auch nach langen Lagerzeiten, wie nach 4 Wochen bei 40°C oder nach 4 Monaten bei 20°C, unverändert beibehalten.

### Beispiel 11

Die Herstellung einer erfindungsgemäßen Farbstoffpräparation erfolgt gemäß den Angaben des Beispieles 12, jedoch wurde als Entstaubungsmittel die gleiche Menge an n-Pentan-1,5-diol eingesetzt. Die erfindungsgemäße Farbstoffpräparation besitzt die gleich guten anwendungstechnischen und färberischen Eigenschaften mit einem ausgezeichneten Entstaubungsgrad (Filterwert 5) wie die Präparation des Beispieles 12.

### Beispiel 12

177,6 Teile eines elektrolythaltigen Pulvers des aus der Deutschen Offenlegungsschrift 1 179 317 bekannten Farbstoffes der Formel 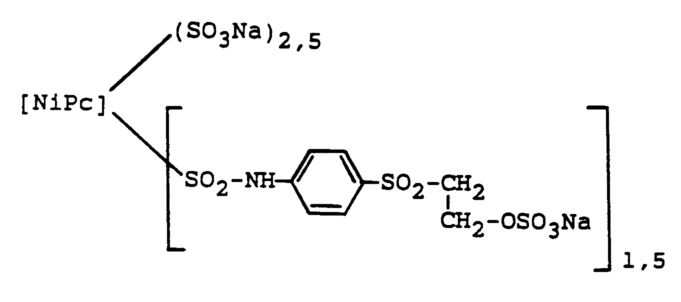
mit einem Farbstoffgehalt von 59,2 Gew.-% wurden mit 107,5 Teilen des Natriumsalzes eines Naphthalinsulfonsäure-Formaldehyd-Kondensationsproduktes mit einem Sulfierungsgrad von 80 bis 120 % und einem Molgewicht von etwa 6500 und 15 Teilen 2-Methyl-pentan-2,4-diol zu einem homogenen, feinpulvrigen Farbstoffpulver vermischt. Die erfindungsgemäße Farbstoffpräparation besitzt ein Filterwert von 4-5, zeigt eine gute Löslichkeit auch in kaltem Wasser, behält diese guten Eigenschaften auch nach langer Lagerung und liefert nach üblichen Färbeweisen beispielsweise auf Baumwolle egale, reine Färbungen in gleicher Weise wie bei Anwendung des Farbstoffes ohne Zusatz des erfindungsgemäßen Entstaubungsmittels.

### Beispiel 13

Zur Herstellung einer erfindungsgemäßen Farbstoffpräparation verfährt man gemäß den Angaben des Beispieles 12, setzt jedoch als Entstaubungsmittel 15 Teile n-Hexan-2,5-diol ein. Die erhaltene erfindungsgemäße Farbstoffpräparation zeigt die gleich guten hervorragenden Eigenschaften wie die des Beispieles 12.

### Beispiel 14

70 Teile eines elektrolythaltigen (vorwiegend natrium- und kaliumchloridhaltigen) Pulvers des bekannten Farbstoffes der Formel 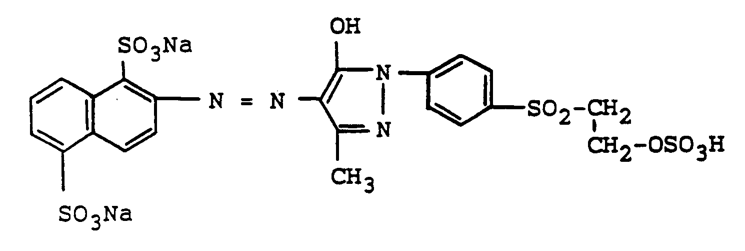
mit einem Farbstoffgehalt von 58,8 Gew.-% wurden mit 27 Teilen Natriumsulfat und 3 Teilen 2-Methyl-pentan-2,4-diol in einem Mischer homogenisiert. Die erhaltene Farbstoffpräparation ist auch in kaltem Wasser gut löslich und hat einen Filterwert von 5. Auch nach viermonatiger Lagerung bei Raumtemperatur oder nach vierwöchiger Lagerung bei 40°C blieb dieser Entstaubungswert unverändert. Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 15

96 Teile einer durch Sprühtrocknung erhaltenen pulverförmigen Mischung von 65 Teilen des bekannten Farbstoffes der Formel 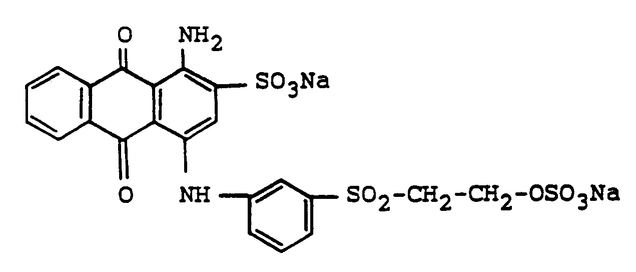
21 Teilen des Natriumsalzes eines Naphthalinsulfonsäure-Formaldehyd-Kondensationsproduktes mit einem Sulfierungsgrad von 80 bis 120 % und einem mittleren Molgewicht von etwa 6500 und 10 Teilen Natrium-anthrachinon-2-sulfonat wurden in einem Mischer mit 4 Teilen 2-Methyl-pentan-2,4-diol homogenisiert. Die erhaltene Farbstoffpräparation ist gut wasserlöslich und hat einen Filterwert von 4-5. Auch nach viermonatiger Lagerung bei Raumtemperatur oder nach vierwöchiger Lagerung bei 40°C blieb dieser Entstaubungswert unverändert. Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 16

54 Teile eines elektrolythaltigen (vorwiegend natriumchloridhaltigen) Pulvers des Farbstoffes der Formel 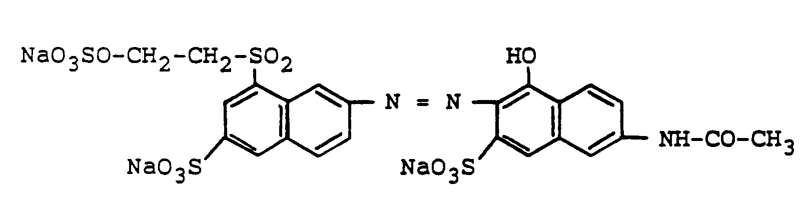
(bekannt aus der Deutschen Offenlegungsschrift 1 943 904) mit einem Farbstoffgehalt von 94,4 Gew.-% wurden mit 36 Teilen Natriumsulfat und 10 Teilen 2-Methyl-pentan-2,4-diol in einem Mischer homogenisiert. Die erhaltene Farbstoffpräparation ist gut wasserlöslich und hat einen Filterwert von 4. Auch nach viermonatiger Lagerung bei Raumtemperatur oder nach vierwöchiger Lagerung bei 40°C blieb dieser Entstaubungswert unverändert. Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 17

308 Teile eines elektrolythaltigen (vorwiegend natriumchloridhaltigen) Pulvers mit einem Gehalt von 81 Gew.-% des im vorhergehenden Beispiel 1 verwendeten Monoazofarbstoffes wurden mit 68 Teilen Natriumsulfat und 24 Teilen 2-Methyl-pentan-2,4-diol in einem Mischer homogenisiert. Die erhaltene Farbstoffpräparation ist gut wasserlöslich und hat einen Filterwert von 4. Auch nach viermonatiger Lagerung bei Raumtemperatur oder nach vierwöchiger Lagerung bei 40°C blieb dieser Entstaubungswert unverändert. Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 18

80 Teile eines elektrolythaltigen (vorwiegend natriumchloridhaltigen) Pulvers des bekannten Farbstoffes der Formel 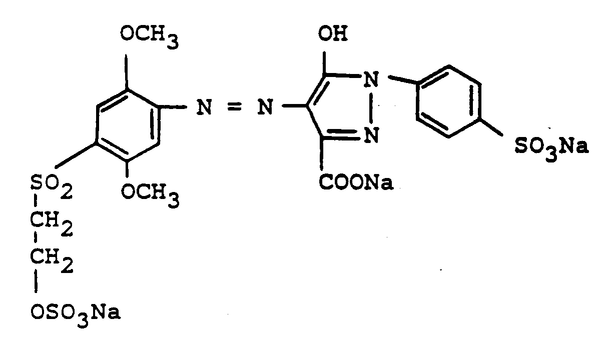
mit einem Farbstoffgehalt von 62,5 Gew.-% wurden mit 18 Teilen Natriumsulfat und 2 Teilen 2-Methyl-pentan-2,4-diol in einem Mischer homogenisiert. Die erhaltene Farbstoffpräparation ist gut wasserlöslich und hat einen Filterwert von 5. Auch nach viermonatiger Lagerung bei Raumtemperatur oder nach vierwöchiger Lagerung bei 40°C blieb dieser Entstaubungswert unverändert.

Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 19

In einer Mischapparatur wurden 77 Teile eines elektolythaltigen (vorwiegend natriumchloridhaltigen) Pulvers des aus der deutschen Patentschrift Nr. 965 902 bekannten Farbstoffes der Formel 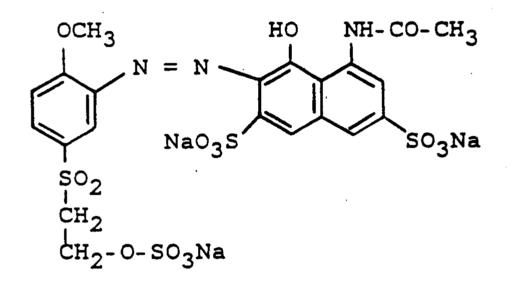
mit einem Farbstoffgehalt von 64,6 Gew.-% mit 20 Teilen Natriumsulfat und 3 Teilen 2-Methylpentan-2,4-diol zu einer homogenen Mischung vermischt. Die erhaltene Farbstoffpräparation ist nicht nur in warmem Wasser, sondern auch in kaltem Wasser gut löslich und zeigt einen Filterwert von 5. Diese vorteilhafte Eigenschaft des nur sehr geringen Staubens der erfindungsgemäßen Farbstoffpräparation bleibt auch bei einer Lagerung von über 6 Monaten bei Raumtemperatur und bei Lagerung bei 40°C während 4 Wochen unverändert. Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 20

87 Teile eines elektrolythaltigen (vorwiegend natriumchloridhaltigen) Pulvers des aus der deutschen Auslegeschrift Nr. 1 233 963 bekannten Farbstoffes der Formel 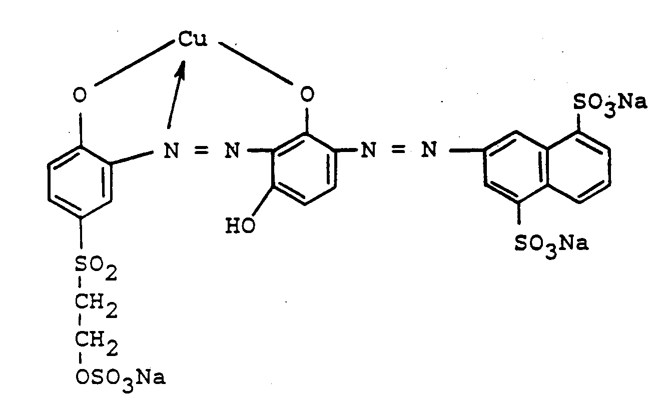
mit einem Farbstoffgehalt von 63,3 Gew.-% wurden mit 11 Teilen Natriumsulfat und 2 Teilen 2-Methyl-pentan-2,4-diol in einem Mischer homogenisiert. Die erhaltene Farbstoffpräparation ist gut wasserlöslich und hat einen Filterwert von 5. Auch nach viermonatiger Lagerung bei Raumtemperatur oder nach vierwöchiger Lagerung bei 40°C blieb dieser Entstaubungswert unverändert.

Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 21

In einer Mischapparatur wurden 88,5 Teile eines elektrolythaltigen (vorwiegend natriumchloridhaltigen) Pulvers des aus den deutschen Auslegungsschriften Nrs. 1 126 542 und 1 544 538 bekannten Farbstoffes der Formel 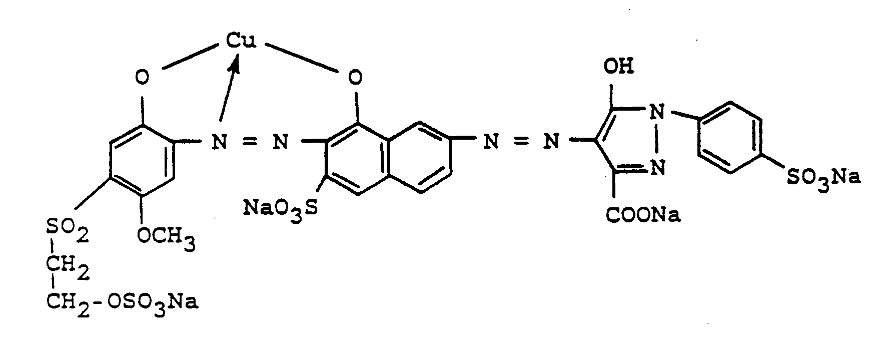
mit einem Farbstoffgehalt von 44,4 Gew.-% mit 6,5 Teilen Natriumsulfat und 5 Teilen 2-Methyl-pentan-2,4-diol zu einer homogenen Mischung vermischt. Die erhaltene Farbstoffpräparation ist nicht nur in warmem Wasser gut löslich, sondern auch in kaltem Wasser, und zeigt einen Filterwert von 5. Diese vorteilhafte Eigenschaft des nur sehr geringen Staubens der erfindungsgemäßen Farbstoffpräparation bleibt auch bei einer Lagerung von über 6 Monaten bei Raumtemperatur und bei Lagerung bei 40°C während 4 Wochen unverändert. Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt worden; das erfindungsgemäß verwendete Entstaubungsmittel beeinflußt die gute Qualität der Färbungen und Drucke in keiner Weise.

### Beispiel 22

In einer Mischapparatur wurden 78 Teile eines elektrolythaltigen (vorwiegend natriumchloridhaltigen) Pulvers des aus der deutschen Patentschrift Nr. 965 902 bekannten Farbstoffes der Formel 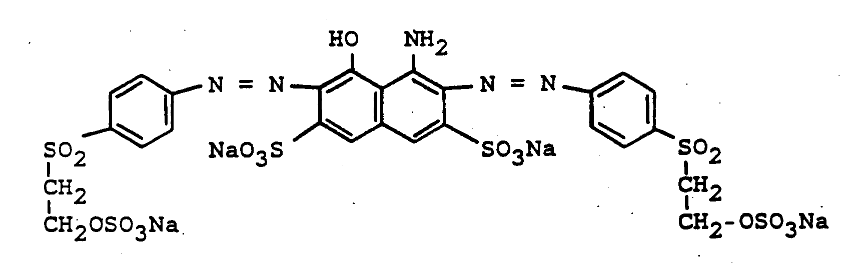
mit einem Farbstoffgehalt von 64 Gew.-% mit 21 Teilen Natriumsulfat und 1 Teil 2-Methyl-pentan-2,4-diol zu einer homogenen Mischung vermischt. Die erhaltene Farbstoffpräparation ist nicht nur in warmem Wasser, sondern auch kaltem Wasser gut löslich, und zeigt einen Filterwert von 5. Diese vorteilhafte Eigenschaft des nur sehr geringen Staubens der erfindungsgemäßen Farbstoffpräparation bleibt auch bei einer Lagerung von über 6 Monaten bei Raumtemperatur und bei Lagerung bei 40°C während 4 Wochen unverändert. Die Farstoffpäparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 23

In einer Mischapparatur wurden 85 Teile einer elektolythaltigen (vorwiegend natriumchloridhaltigen) Farbstoffmischung mit einem Farbstoffgehalt von 55,6 Gew.-% des Farbstoffes der im Beispiel 26 angegebenen Formel und mit einem Farbstoffgehalt von 13,5 Gew.-% des Farbstoffes der Formel 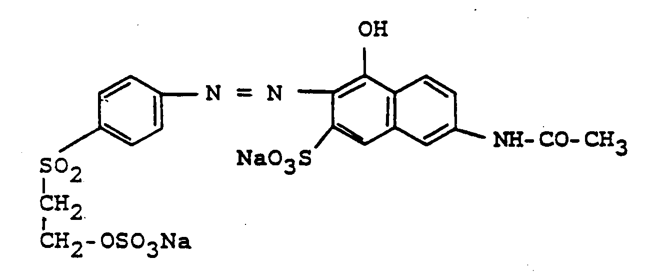
(bekannt als Bestandteil dieser Mischung aus der japanischen Patentanmeldungs-Veröffentlichung Sho-58-160362) mit 12 Teilen Natriumsulfat und 3 Teilen 2-Methyl-pentan-2,4-diol zu einer homogenen Mischung vermischt. Die erhaltene Farbstoffpräparation ist nicht nur in warmem Wasser, sondern auch in kaltem Wasser gut löslich, und zeigt einen Filterwert von 5. Diese vorteilhafte Eigenschaft des nur sehr geringen Staubens der erfindungsgemäßen Farbstoffpräparation bleibt auch bei einer Lagerung von über 6 Wochen unverändert. Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 24

80 Teile eines elektrolythaltigen (vorwiegend natriumchloridhaltigen) Pulvers des aus der deutschen Offenlegungschrift 1 943 904 bekannten Farbstoffes der Formel 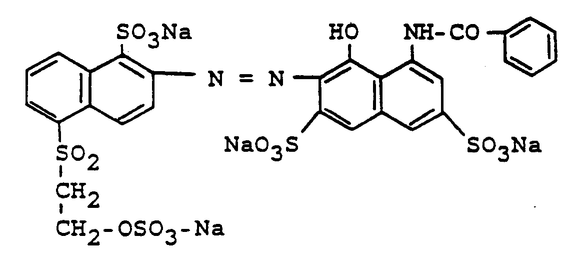
mit einem Farbstoffgehalt von 67,1 Gew.-% wurden mit 18 Teilen Natriumsulfat und 2 Teilen 2-Methyl-pentan-2,4-diol in einem Mischer homogenisiert. Die erhaltene Farbstoffpräparation ist gut wasserlöslich und hat einen Filtervert von 5. Auch nach viermonatiger Lagerung bei Raumtemperatur oder nach vierwöchiger Lagerung bei 40°C blieb dieser Entstaubungswert unverändert.

Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 25

91 Teile eines elektrolythaltigen (vorwiegend natriumchloridhaltigen) Pulvers des Farbstoffes der Formel 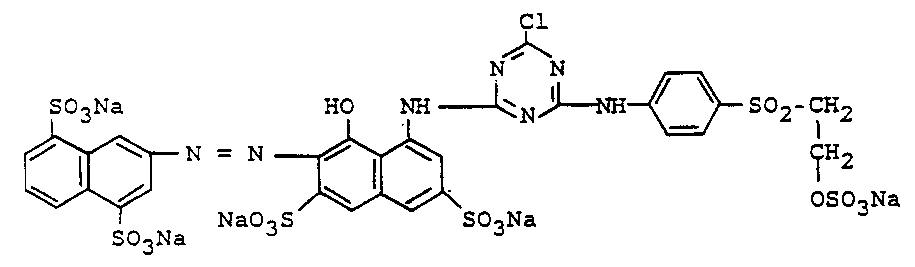
(bekannt aus den japanischen Patentanmeldungs-Veröffentlichungen Sho-48-52258 und Sho-58-55189) mit einem Farbstoffgehalt von 56,6 Gew.-% wurden mit 7 Teilen Natriumsulfat und 2 Teilen 2-Methyl-pentan-2,4-diol homogen vermischt. Die erhaltene Farbstoffpräparation ist gut wasserlöslich und hat einen Filterwert von 5. Auch nach viermonatiger Lagerung bei Raumtemperatur oder nach vierwöchiger Lagerung bei 40°C blieb dieser Entstaubungswert unverändert.

Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 26

73 Teile eines elektrolythaltigen (vorwiegend natriumchloridhaltigen) Pulvers des aus der europäischen Patentanmeldungs-Veröffentlichung Nr. 0 056 975A bekannten Farbstoffes der Formel 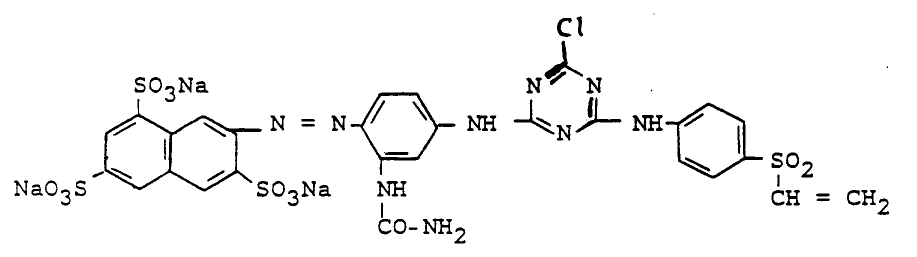
mit einem Farbstoffgehalt von 66,5 Gew.-% wurden mit 25 Teilen Natriumsulfat und 2 Teilen 2-Methyl-pentan-2,4-diol in einem Mischer homogenisiert. Die erhaltene Farbstoffpräparation ist gut wasserlöslich und hat einen Filterwert von 4-5. Auch nach viermonatiger Lagerung bei Raumtemperatur oder nach vierwöchiger Lagerung bei 40°C blieb dieser Entstaubungswert unverändert.

Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 27

In einer Mischapparatur wurden 83,3 Teile eines elektrolythaltigen (vorwiegend natriumchloridhaltigen) Pulvers des aus der deutschen Auslegeschrift Nr. 1 126 542 bekannten Farbstoffes der Formel 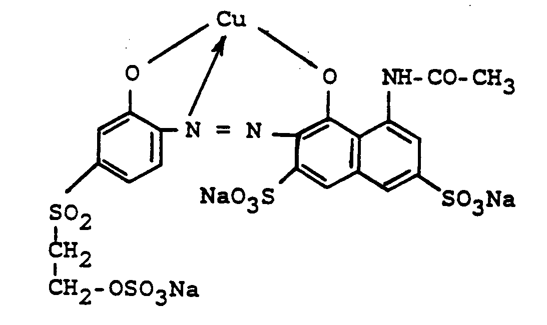
mit einem Farbstoffgehalt von 54 Gew.-% mit 11,7 Teilen Natriumsulfat und 5 Teilen 2-Methyl-pentan-2,4-diol zu einer homogenen Mischung vermischt. Die erhaltene Farbstoffpräparation ist nicht nur in warmem Wasser gut löslich, sondern auch in kaltem Wasser, und zeigt einen Filterwert von 5. Diese vorteilhafte Eigenschaft des nur sehr geringen Staubens der erfindungsgemäßen Farbstoffpräparation bleibt auch bei einer Lagerung bei 40°C während 4 Wochen unverändert. Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 28

77 Teile eines elektrolythaltigen (vorwiegend natriumsulfathaltigen) Pulvers des aus der deutschen Offenlegungsschrift Nr. 2 945 532 bekannten Farbstoffes der Formel 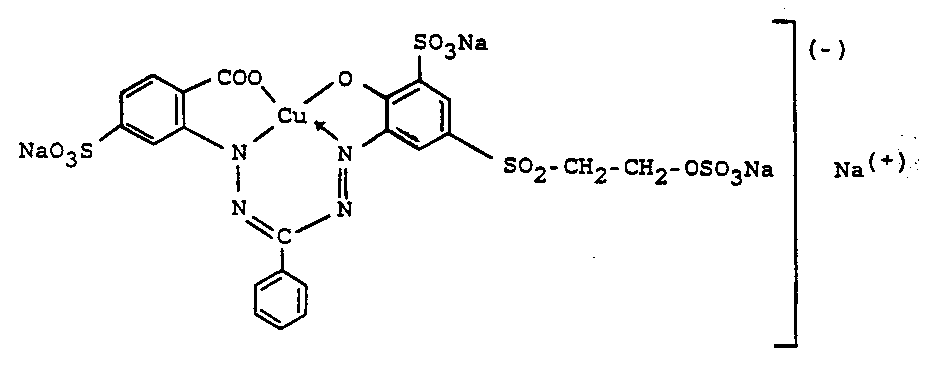
mit einem Farbstoffgehalt von 46,8 Gew.-% wurden mit 19 Teilen Natriumsulfat und 4 Teilen 2-Methyl-pentan-2,4-diol in einem Mischer homogenisiert. Die erhaltene Farbstoffpräparation ist gut wasserlöslich und hat einen Filterwert von 4. Auch nach viermonatiger Lagerung bei Ramtemperatur oder nach viewöchiger Lagerung bei 40°C blieb dieser Entstaubungswert unverändert.

Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 29

In einer Mischapparatur wurden 67 Teile eines elektolythaltigen (vorwiegend natriumchloridhaltigen) Pulvers des aus den deutschen Offenlegungsschriften Nrs. 3 113 885 und 3 113 989 bekannten Farbstoffes der Formel 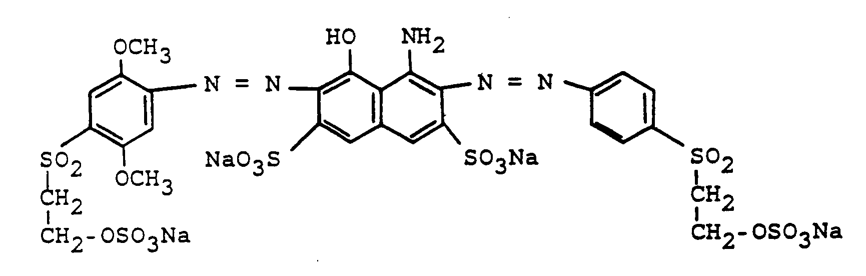
mit einem Farbstoffgehalt von 76,2 Gew.-% mit 31 Teilen Natriumsulfat und 2 Teilen 2-Methyl-pentan-2,4-diol zu einer homogenen Mischung vermischt. Die erhaltene Farbstoffpräparation ist nicht nur in warmem Wasser, sondern auch in kaltem Wasser gut löslich, und zeigt einen Filterwert von 5. Diese vorteilhafte Eigenschaft des nur sehr geringen Staubens der erfindungsgemäßen Farbstoffpräparation bleibt auch bei einer Lagerung von über 6 Monaten bei Raumtemperatur und bei Lagerung bei 40 °C während 4 Wochen unverändert. Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise

### Beispiel 30

76 Teile einer elektrolythaltigen (vorwiegend natriumchloridhaltigen) Pulververmischung der aus der deutschen Offenlegungsschrift Nr. 2 442 553 bekannten Farbstoffe der allgemeinen Formel 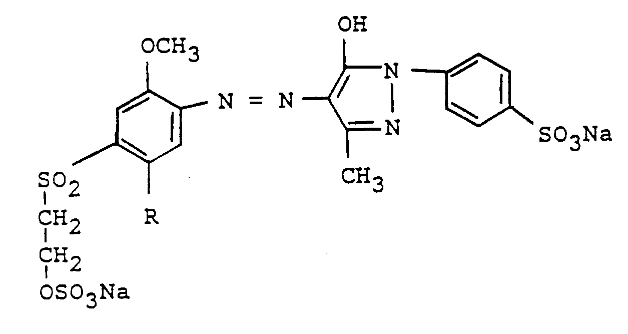
mit einem Farbstoffgehalt von 24,1 Gew.-% (R = CH₃) und 48,5 Gew.-% (R = OCH₃) wurden mit 21 Teilen Natriumsulfat und mit 3 Teilen 2-Methyl-pentan-2,4-diol in einem Mischer homogenisiert. Die erhaltene Farbstoffpräparation ist gut wasserlöslich und hat einen Filterwert von 5. Auch nach viermonatiger Lagerung bei Raumtemperatur oder nach vierwöchiger Lagerung bei 40°C blieb dieser Entstaubungswert unverändert.

Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 31

81 Teile eines elektrolythaltigen (vorwiegend natriumchloridhaltigen) Pulvers des aus der deutschen Auslegeschrift Nr. 1 664 157 bekannten Farbstoffes der Formel 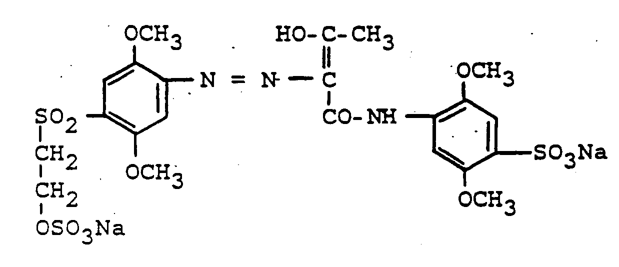
mit einem Farbstoffgehalt von 74,5 Gew.-% wurden mit 11 Teilen Natriumsulfat und 8 Teilen 2-Methyl-pentan-2,4-diol in einem Mischer homogenisiert. Die erhaltene Farbstoffpräparation ist gut wasserlöslich und hat einen Filterwert von 4-5. Auch nach viermonatiger Lagerung bei Raumtemperatur oder nach vierwöchiger Lagerung bei 40°C blieb dieser Entstaubungswert unverändert.

Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 32

In einer Mischapparatur wurden 76,6 Teile eines elektrolythaltigen (vorwiegend kalium- und natriumchloridhaltigen) Pulvers des aus der deutschen Auslegeschrift Nr. 1 126 542 bekannten Farbstoffes der Formel 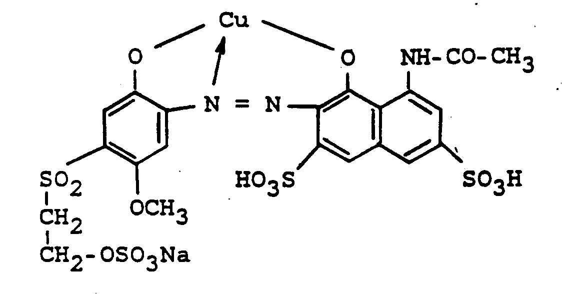
(in Form eines Na-/K-Salz-Gemisches) mit einem Farbstoffgehalt von 43,1 Gew.-%, 18,4 Teile Natriumsulfat und 5 Teile 2-Methyl-pentan-2,4-diol zu einer homogenen Mischung vermischt. Die erhaltene Farbstoffpräparation ist nicht nur in warmem Wasser gut löslich, sondern auch in kaltem Wasser, und zeigt einen Filterwert von 4. Diese vorteilhafte Eigenschaft des nur sehr geringen Staubens der erfindungsgemäßen Farbstoffpräparation bleibt auch bei einer Lagerung von über 6 Monaten bei Raumtemperatur und bei Lagerung bei 40°C während 4 Wochen unverändert.

Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 33

In einer Mischapparatur wurden 84 Teile eines elektrolythaltigen (vorwiegend natriumchloridhaltigen) Pulvers des aus der deutschen Offenlegungsschrift Nr. 2 142 728 bekannten Farbstoffes der Formel 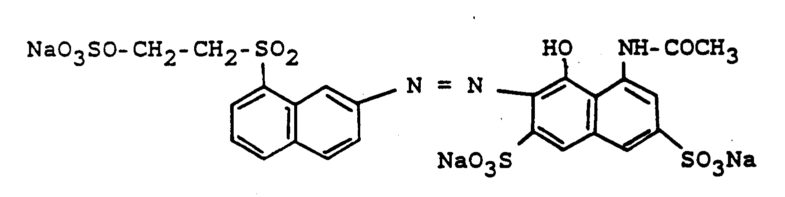
mit einem Farbstoffgehalt von 75,8 Gew.-% mit 14 Teilen Natriumsulfat und 2 Teilen 2-Methyl-pentan-2,4-diol zu einer homogenen Mischung vermischt. Die erhaltene Farbstoffpräparation ist nicht nur in warmem Wasser, sondern auch in kaltem Wasser gut löslich und zeigt einen Filterwert von 5. Diese vorteilhafte Eigenschaft des nur sehr geringen Staubens der erfindungsgemäßen Farbstoffpräparation bleibt auch bei einer Lagerung von über 6 Monaten bei Raumtemperatur und bei Lagerung bei 40°C während 4 Wochen unverändert.

Die Farbstoffpräparation kann gemäß den für faserreaktive Farbstoffe üblichen Anwendungsmethoden zum Färben von beispielsweise Cellulosefasermaterialien, wie Baumwolle, in farbstarken, echten Tönen eingesetzt werden; das erfindungsgemäß verwendete Entstaubungsmittel beeinflußt die gute Qualität der Färbungen und Drucke in keiner Weise.

### Beispiel 34

Die Herstellung einer erfindungsgemäßen Farbstoffpräparation erfolgte gemäß den Angaben des Beispiels 5, jedoch wurde anstelle des Naphthalinsulfonsäure-Formaldehyd-Kondensationsproduktes die gleiche Menge Natriumsulfat verwendet. Die erhaltene erfindungsgemäße Farbstoffpärparation ist ebenfalls in kaltem Wasser gut löslich, zeigt einen Filterwert von 4-5, der auch nach einer langen Lagerzeit unverändert bleibt, und liefert Färbungen in gleich hoher Qualität wie die Farbstoffpräparation des Beispiels 5.

### Beispiel 35

Etwa 3200 Teile einer aus der Synthese des Farbstoffes der Formel 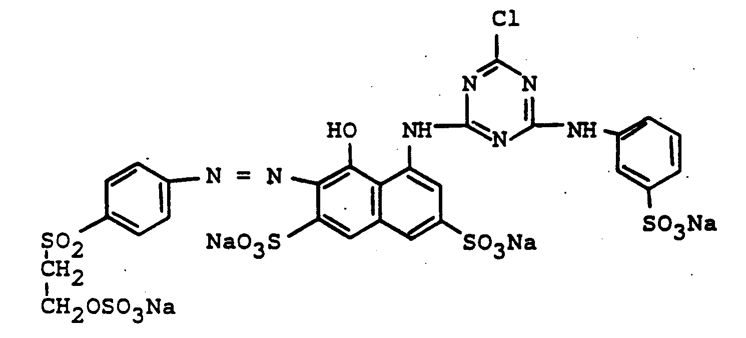
(bekannt aus Beispiel 1 der US-PS 4 725 675) erhältlichen wäßrigen, elektrolythaltigen Lösung mit 404 Teilen dieses Farbstoffes wurde mit 10 Teilen 2-Methyl-pentan-2,4-diol versetzt und sprühgetrocknet. Es wurden etwa 780 Teile Farbstoffpulver mit einem Farbstoffgehalt von 52,5 Gew.-% erhalten, die mit weiteren 40 Teilen 2-Methyl-pentan-2,4-diol und 180 Teilen Natriumsulfat homogen vermischt wurden und eine erfindungsgemäße Präparation mit sehr guter Löslichkeit in kaltem Wasser und einem Filterwert von 4-5 ergaben. Diese vorteilhaften Eigenschaften bleiben auch nach langer Lagerzeit unverändert erhalten, und die erhältlichen Färbungen zeigen gleich gute Qualitäten wie unter Anwendung des Farbstoffes ohne Zusatz des erfindungsgemäß verwendeten Entstaubungsmittels.

### Beispiel 36

Etwa 370 Teile einer aus der Synthese des Farbstoffes der Formel 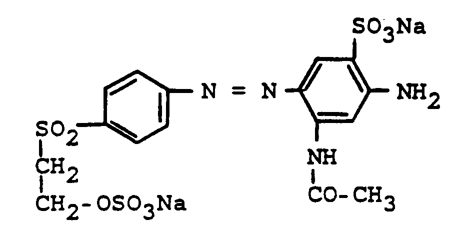
(bekannt aus Beispiel 1 der US-PS 4 703 112) erhältlichen, elektrolythaltigen wäßrigen Lösung mit 40 Teilen dieses Farbstoffes wurde mit 2 Teilen Neopentylglykol versetzt und sprühgetrocknet. Es wurden 70 Teile eines Farbstoffpulvers mit einem Farbstoffgehalt von 58,8 Gew.-% erhalten, das mit 27 Teilen Natriumsulfat und 3 Teilen 2-Methyl-pentan-2,4-diol homogen vermischt wurde. Die erfindungsgemäße Farbstoffpräparation besitzt eine sehr gute Kaltwasserlöslichkeit; der Filterwert wurde mit 4-5 ermittelt. Diese hochwertigen Eigenschaften der Präparation werden auch nach langen Lagerzeiten praktisch unverändert beibehalten. Die mit ihr erhältlichen Färbungen sind von hoher Qualität; das enthaltene Entstaubungsmittel beeinflußt das Färbevermögen und die Qualität der Färbungen in keiner Weise.

## Patentansprüche (Patentansprüche für folgende(n) Vertragsstaat(en): BE, CH, DE, FR, GB, IT, LI, NL)

1. Pulverförmige, im wesentlichen wasserfreie Farbstoffpräparation, gekennzeichnet durch den Gehalt eines bei Raumtemperatur flüssigen Alkandiols mit 5 bis 8 C-Atomen.

2. Präparation nach Anspruch 1, gekennzeichnet durch einen Gehalt des Diols oder einer Mischung von mindestens zweier solcher Diole von 0,5 bis 20 Gew.-%.

3. Präparation nach Anspruch 1, gekennzeichnet durch einen Gehalt des Diols oder einer Mischung von mindestens zweier solcher Diole von 1 bis 10 Gew.-%.

4. Präparation nach mindestens einem der Ansprüche 1 bis 3, dadurch gekennzeichnet, daß der Farbstoff ein faserreaktiver Farbstoff ist.

5. Präparation nach mindestens einem der Ansprüche 1 bis 4, mit einem Farbstoffgehalt von 20 bis 80 Gew.-%.

6. Präparation nach mindestens einem der Ansprüche 1 bis 5, dadurch gekennzeichnet, daß das Alkandiol 2-Methyl-pentan-2,4-diol ist.

7. Präparation nach mindestens einem der Ansprüche 1 is 5, dadurch gekennzeichnet, daß das Alkandiol n-Pentan-1,5-diol ist.

8. Präparation nach mindestens einem der Ansprüche 1 bis 5, dadurch gekennzeichnet, daß das Alkandiol n-Hexan-2,5-diol ist.

9. Verwendung einer Farbstoffpräparation von mindestens einem der Ansprüche 1 bis 8 zum Färben von Materialien.

10. Verwendung eines bei Raumtemperatur flüssigen Alkandiols von 5 bis 8 C-Atomen als Entstaubungsmittel in pulverförmigen, im wesentlichen wasserfreien Farbstoffpräparationen.

11. Verwendung nach Anspruch 10, dadurch gekennzeichnet, daß das Alkandiol 2-Methyl-pentan-2,4-diol, n-Pentan-1,5-diol oder n-Hexan-2,5-diol oder eine Mischung von mindestens zwei solcher Verbindungen ist.

12. Verfahren zur Reduzierung oder Verhinderung des Staubens von pulverförmigen, im wesentlichen wasserfreien Farbstoffpräparationen, dadurch gekennzeichnet, daß man eine Lösung, Dispersion oder Suspension eines Farbstoffes oder eine feste Farbstoffpräparation mit einem bei Raumtemperatur flüssigen Alkandiol von 5 bis 8 C-Atomen vermischt und die Mischung, erforderlichenfalls nach Trocknen, in eine pulverförmige Präparation überführt.

## Patentansprüche (Patentansprüche für folgende(n) Vertragsstaat(en): ES)

1. Verfahren zur Herstellung einer pulverförmigen, im wesentlichen wasserfreien, nicht-staubenden oder staubverminderten Farbstoffpräparation, dadurch gekennzeichnet, daß man bei deren Herstellung als staubhinderndes oder staubminderndes Mittel ein bei Raumtemperatur flüssiges Alkandiol mit 5 bis 8 C-Atomen einsetzt.

2. Verfahren nach Anspruch 1, dadurch gekennzeichnet, daß man das Alkandiol oder eine Mischung von mindestens zweier solcher Alkandiole in einer Menge von 0,5 bis 20 Gew.-%, bezogen auf die Farbstoffpräparation, einsetzt.

3. Verfahren nach Anspruch 1, dadurch gekennzeichnet, daß man das Alkandiol oder eine Mischung von mindestens zweier solcher Alkandiole in einer Menge von 1 bis 10 Gew.-%, bezogen auf die Farbstoffpräparation, einsetzt.

4. Verfahren nach mindestens einem der Ansprüche 1 bis 3, dadurch gekennzeichnet, daß der Farbstoff in der Farbstoffpräparation ein faserreaktiver Farbstoff ist.

5. Verfahren nach mindestens einem der Ansprüche 1 bis 4, dadurch gekennzechnet, daß der Farbstoffgehalt in der Präparation 20 bis 80 Gew.-% beträgt.

6. Verfahren nach mindestens einem der Ansprüche 1 bis 5, dadurch gekennzeichnet, daß das eingesetzte Alkandiol 2-Methyl-pentan-2,4-diol ist.

7. Verfahren nach mindestens einem der Ansprüche 1 bis 5, dadurch gekennzeichnet, daß das eingesetzte Alkandiol n-Pentan-1,5-diol ist.

8. Verfahren nach mindestens einem der Ansprüche 1 bis 5, dadurch gekennzeichnet, daß das eingesetzte Alkandiol n-Hexan-2,5-diol ist.

9. Verfahren zur Reduzierung oder Verhinderung des Staubens von pulverförmigen, im wesentlichen wasserfreien Farbstoffpräparationen, dadurch gekennzeichnet, daß man eine Lösung, Dispersion oder Suspension eines Farbstoffes oder eine feste Farbstoffpräparation mit einem bei Raumtemperatur flüssigen Alkandiol von 5 bis 8 C-Atomen vermischt und die Mischung, erforderlichenfalls nach Trocknen, in eine pulverförmige Präparation überführt.

## Claims (Claims for the following Contracting State(s): BE, CH, DE, FR, GB, IT, LI, NL)

1. A pulverulent, essentially water-free dye preparation containing an alkanediol of from 5 to 8 carbon atoms which is liquid at room temperature.

2. A preparation as claimed in claim 1, containing from 0.5 to 20 % by weight of the diol or of a mixture of at least two such diols.

3. A preparation as claimed in claim 1, containing from 1 to 10 % by weight of the diol or of a mixture of at least two such diols.

4. A preparation as claimed in at least one of claims 1 to 3, wherein the dye is a fiber-reactive dye.

5. A preparation as claimed in at least one of claims 1 to 4, having a dye content of from 20 to 80 % by weight.

6. A preparation as claimed in at least one of claims 1 to 5, wherein the alkanediol is 2-methylpentane-2,4-diol.

7. A preparation as claimed in at least one of claims 1 to 5, wherein the alkanediol is n-pentane-1,5-diol.

8. A preparation as claimed in at least one of claims 1 to 5, wherein the alkanediol is n-hexane-2,5-diol.

9. The use of a dye preparation of at least one of claims 1 to 8 for dyeing or coloring materials.

10. The use of an alkanediol of from 5 to 8 carbon atoms which is liquid at room temperature as a dust-proofing agent in pulverulent, essentially water-free dye preparations.

11. A use as claimed in claim 10, wherefor the alkanediol is 2-methylpentane-2,4-diol, n-pentane-1,5-diol or n-hexane-2,5-diol or a mixture of at least two such compounds.

12. A process for reducing or preventing dusting of pulverulent, essentially water-free dye preparations, which comprises mixing a solution, dispersion or suspension of a dye or a solid dye preparation with an alkanediol of from 5 to 8 carbon atoms which is liquid at room temperature and converting the mixture, if required after drying, into a pulverulent preparation.

## Claims (Claims for the following Contracting State(s): ES)

1. A process for preparing a pulverulent, essentially water-free, nondusting or reduced-dust dye preparation, which comprises employing in the production thereof an alkanediol of from 5 to 8 carbon atoms which is liquid at room temperature as dust-preventing or dust-reducing agent.

2. The process as claimed in claim 1, wherein from 0.5 to 20 % by weight, based on the dye preparation, of the alkanediol or of a mixture of at least two such alkanediols is employed.

3. The process as claimed in claim 1, wherein from 1 to 10 % by weight, based on the dye preparation, of the alkanediol or of a mixture of at least two such alkanediols is employed.

4. The process as claimed in at least one of claims 1 to 3, wherein the dye in the dye preparation is a fiber-reactive dye.

5. The process as claimed in at least one of claims 1 to 4, wherein the dye content in the preparation is from 20 to 80 % by weight.

6. The process as claimed in at least one of claims 1 to 5, wherein the alkanediol employed is 2-methylpentane-2,4-diol.

7. The process as claimed in at least one of claims 1 to 5, wherein the alkanediol employed is n-pentane-1,5-diol.

8. The process as claimed in at least one of claims 1 to 5, wherein the alkanediol employed is n-hexane-2,5-diol.

9. A process for reducing or preventing dusting or pulverulent, essentially water free dye preparations, which comprises mixing a solution, dispersion or suspension of a dye or a solid dye preparation with an alkanediol of from 5 to 8 carbon atoms which is liquid at room temperature and converting the mixture, if required after drying, into a pulverulent preparation.

## Revendications (Revendications pour l'(les) Etat(s) contractant(s) suivant(s): BE, CH, DE, FR, GB, IT, LI, NL)

1. Préparation de colorants pulvérulente essentiellement exempte d'eau, caractérisée par la teneur en un alcanediol avec 5 à 8 atomes de carbone liquide à la température ambiante.

2. Préparation selon la revendication 1, caractérisée par une teneur en le diol ou un mélange d'au moins deux de tels diols de 0,5 à 20 % en poids.

3. Préparation selon la revendication 1, caractérisée par une teneur en le diol ou un mélange de deux de tels diols de 1 à 10 % en poids.

4. Préparation selon au moins l'une des revendications 1 à 3, caractérisée en ce que le colorant est un colorant reactif vis-à-vis des fibres.

5. Préparation selon au moins l'une des revendications 1 à 4, ayant une teneur en colorant de 20 à 80 % en poids.

6. Préparation selon au moins l'une des revendications 1 à 5, caractérisée en ce que l'alcanediol est le 2-méthylpentane-2,4-diol.

7. Préparation selon au moins l'une des revendications 1 à 5, caractérisée en ce que l'alcanediol est le n-pentane-1,5-diol.

8. Préparation selon au moins l'une des revendications 1 à 5, caractérisée en ce que l'alcanediol est le n-hexane-2,5-diol.

9. Utilisation d'une préparation de colorant d'au moins l'une des revendications 1 à 8 pour la teinture de matières.

10. Utilisation d'un alcanediol avec 5 à 8 atomes de carbone liquide à la température ambiante comme agent de dépoussiérage dans des préparations de colorants pulvérulentes, essentiellement exemptes d'eau.

11. Utilisation selon la revendication 10, caractérisée en ce que l'alcanediol est le 2-méthylpentane-2,4-diol, le n-pentane-1,5-diol ou le n-hexane-2,5-diol ou un mélange d'au moins deux de ces composés.

12. Procédé pour la réduction ou pour l'empêchement du dégagement de poussières des préparations de colorants pulvérulentes essentiellement exemptes d'eau, caractérisé en ce qu'on mélange une solution, une dispersion ou une suspension d'un colorant ou une préparation solide de colorant avec un alcanediol comportant 5 à 8 atomes de carbone liquide à la température ambiante et on transforme le mélange, si nécessaire après séchage, en une préparation pulvérulente.

## Revendications (Revendications pour l'(les) Etat(s) contractant(s) suivant(s): ES)

1. Procédé pour préparer une préparation de colorant pulvérulente essentiellement exempte d'eau, sans poussières ou pauvre en poussières, caractérisé en ce qu'on utilise dans la préparation comme agent empêchant le dégagement des poussières ou réduisant le dégagement des poussières un alcanediol avec 5 à 8 atomes de carbone liquide à la température ambiante.

2. Procédé selon la revendication 1, caractérisé en ce qu'on utilise l'alcanediol ou un mélange d'au moins deux de tels alcanediols à raison de 0,5 à 20 % en poids par rapport à la préparation de colorant.

3. Procédé selon la revendication 1, caractérisé en ce qu'on utilise l'alcanediol ou un mélange d'au moins deux de tels alcanediols à raison de 1 à 10 % en poids.

4. Procédé selon au moins l'une des revendications 1 à 3, caractérisé en ce que le colorant dans la préparation de colorant est un colorant réactif vis-à-vis des fibres.

5. Procédé selon au moins l'une des revendications 1 à 4, caractérisé en que la teneur en colorant dans la préparation est de 20 à 80 % en poids.

6. Procédé selon au moins l'une des revendications 1 à 5, caractérisé en ce que l'alcanediol utilisé est le 2-méthylpentane-2,4-diol.

7. Procédé selon au moins l'une des revendications 1 à 5, caractérisé en ce que l'alcanediol utilisé est le n-pentane-1,5-diol.

8. Procédé selon au moins l'une des revendications 1 à 5, caractérisé en ce que l'alcanediol utilisé est le n-hexane-2,5-diol.

9. Procédé pour réduire ou pour empêcher le dégagement de poussières des préparations de colorants pulvérulentes essentiellement exemptes d'eau, caractérisé en ce qu'on mélange une solution, une dispersion ou une suspension d'un colorant ou une préparation solide de colorant avec un alcanediol comprenant 5 à 8 atomes de carbone liquide à la température ambiante et on transforme le mélange, si nécessaire après séchage, en une préparation pulvérulente.
